(19) **Europäisches Patentamt / European Patent Office / Office européen des brevets**

(11) **EP 4 314 789 B1**

(12) **FASCICULE DE BREVET EUROPEEN**

(45) Date de publication et mention de la délivrance du brevet:
**08.07.2026 Bulletin 2026/28**

(21) Numéro de dépôt: **22717628.6**

(22) Date de dépôt: **25.03.2022**

(51) Classification Internationale des Brevets (IPC):
**G01N 27/00** *(2006.01)* **G01V 3/06** *(2006.01)*

(52) Classification Coopérative des Brevets (CPC):
**G01N 27/026**

(86) Numéro de dépôt international:
**PCT/EP2022/057897**

(87) Numéro de publication internationale:
**WO 2022/200558 (29.09.2022 Gazette 2022/39)**

(54) **PROCÉDÉ DE MESURE PAR TOMOGRAPHIE PAR IMPÉDANCE ÉLECTRIQUE**

VERFAHREN ZUR MESSUNG DURCH ELEKTRISCHE IMPEDANZTOMOGRAFIE

METHOD OF MEASURING BY ELECTRICAL IMPEDANCE TOMOGRAPHY

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **26.03.2021 FR 2103099**

(43) Date de publication de la demande:
**07.02.2024 Bulletin 2024/06**

(73) Titulaire: **Commissariat à l'Energie Atomique et aux Energies Alternatives**
**75015 Paris (FR)**

(72) Inventeurs:
• **DARNAJOU, Mathieu**
**84120 PERTUIS (FR)**
• **RICCIARDI, Guillaume**
**13100 LE THOLONET (FR)**

(74) Mandataire: **Ipsilon**
**12 Avenue d'Italie**
**75013 Paris (FR)**

(56) Documents cités:
• **DARNAJOU MATHIEU ET AL: "High Speed EIT With Multifrequency Excitation Using FPGA and Response Analysis Using FDM", IEEE SENSORS JOURNAL, IEEE, USA, vol. 20, no. 15, 30 March 2020 (2020-03-30), pages 8698 - 8710, XP011797306, ISSN: 1530-437X, [retrieved on 20200702], DOI: 10.1109/JSEN.2020.2984388**
• **DUPRE ANTOINE ET AL: "A Simultaneous and Continuous Excitation Method for High-Speed Electrical Impedance Tomography with Reduced Transients and Noise Sensitivity", SENSORS, 28 March 2018 (2018-03-28), pages 1 - 18, XP055865628, Retrieved from the Internet <URL:https://www.ncbi.nlm.nih.gov/pmc/articles/PMC5948595/> [retrieved on 20211124]**
• **GRANOT YAIR ET AL: "Frequency-Division Multiplexing for Electrical Impedance Tomography in Biomedical Applications", vol. 2007, 1 January 2007 (2007-01-01), pages 1 - 9, XP055865034, ISSN: 1687-4188, Retrieved from the Internet <URL:http://downloads.hindawi.com/journals/ijbi/2007/054798.pdf> [retrieved on 20211125], DOI: 10.1155/2007/54798**
• **GAVIN TEAGUE: "MASS FLOW MEASUREMENT OF MULTI-PHASE MIXTURES BY MEANS OF TOMOGRAPHIC TECHNIQUES ACKNOWLEDGEMENTS", 1 September 2002 (2002-09-01), pages 1 - 211, XP055665624, Retrieved from the Internet <URL:http://mysite.mweb.co.za/residents/jontapson/index_files/GavinTeaguePhD.pdf> [retrieved on 20200205]**

**(Cont. page suivante)**

- DUPRÉ A ET AL: "Simultaneous and Continuous Excitation Strategy for High-speed EIT: the ONE-SHOT method", 9TH WORLD CONGRESS ON INDUSTRIAL PROCESS TOMOGRAPHY, 30 September 2018 (2018-09-30), XP055864639, Retrieved from the Internet <URL:https://www.researchgate.net/publication/328428950_Simultaneous_and_Continuous_Excitation_Strategy_for_High-speed_EIT_the_ONE-SHOT_method> [retrieved on 20211123]
- DARNAJOU MATHIEU ET AL: "On the Implementation of Simultaneous Multi-Frequency Excitations and Measurements for Electrical Impedance Tomography", SENSORS, vol. 19, no. 17, 24 August 2019 (2019-08-24), pages 3679 - 6, XP055864653, Retrieved from the Internet <URL:https://pdfs.semanticscholar.org/36e2/6ff18533706bb3b2c25f724432689441dadb.pdf?_ga=2.202128209.1571032400.1637663062-1667424949.1633638375> DOI: 10.3390/s19173679
- CHENEY M ET AL: "NOSER: AN ALGORITHM FOR SOLVING THE INVERSE CONDUCTIVITY PROBLEM", INTERNATIONAL JOURNAL OF IMAGING SYSTEMS AND TECHNOLOGY, WILEY AND SONS, NEW YORK, US, vol. 2, no. 2, 1 January 1990 (1990-01-01), pages 66 - 75, XP001194595, ISSN: 0899-9457

**Description**

**Domaine technique**

La présente invention concerne le domaine de la tomographie par impédance électrique.

L'invention porte plus particulièrement sur un procédé de mesure par tomographie par impédance électrique utilisant des signaux trigonométriques simultanés pour l'excitation des électrodes.

L'invention concerne également un produit programme d'ordinateur configuré pour mettre en œuvre ce procédé de mesure.

L'application principale visée par la présente invention concerne la surveillance d'écoulements de fluides susceptibles de varier de façon abrupte, comme cela peut être le cas pour des fluides circulant sous haute pression et à haute température.

Une application d'intérêt particulier concerne la surveillance de conduits d'installations nucléaires, mais d'autres applications peuvent être envisagées dans le cadre de l'invention.

**Technique antérieure**

La Tomographie par Impédance Electrique (TIE) est une technique non invasive, non destructive, qui permet de visualiser, en temps réel et en continu, l'intérieur d'un objet en mesurant les propriétés électriques (potentiel et courant électrique) de l'objet à sa surface. Cette approche, robuste, est particulièrement adaptée à la réalisation de mesures non intrusives dans des environnements sous hautes pressions et/ou hautes températures.

La TIE consiste plus précisément à injecter des courants ou potentiels électriques au moyen d'un ensemble d'électrodes non-intrusives disposées à la surface de l'objet surveillé et ensuite à mesurer les potentiels ou courants électriques à la surface de l'objet.

Les électrodes peuvent être uniquement en contact avec la surface extérieure de l'objet. Toutefois, dans le cas où la surface de l'objet est en métal, les électrodes doivent traverser la paroi et être en contact avec le fluide.

La carte de l'impédance à l'intérieur de l'objet est reconstruite en résolvant le problème inverse associé.

Il est connu de mettre en œuvre un multiplexage temporel selon lequel un signal d'excitation est imposé à une unique paire d'électrodes à la fois. Les différentes paires d'électrodes sont sélectionnées séquentiellement au moyen de multiplexeurs ou d'interrupteurs électroniques de sorte à permettre l'obtention d'une image de TIE.

Une image de TIE comprend les données de mesure de toutes les paires d'électrodes excitées.

Ces données peuvent être utilisées pour déterminer la distribution de potentiel et résoudre le problème inverse consistant à reconstruire la distribution des propriétés des matériaux au sein de l'objet (conductivité électrique, permittivité...).

Le multiplexage temporel ne permet cependant pas d'obtenir un taux élevé d'acquisition des données TIE.

Le multiplexage en fréquence permet de générer une superposition de signaux injectés simultanément, ce qui autorise des taux d'acquisition de données plus élevés.

La thèse [1] divulgue un procédé de mesure de débits massiques de différents composants d'un mélange. Ce procédé utilise une technique de tomographie par impédance utilisant le multiplexage en fréquence.

Les publications [2], [3], [4] décrivent chacune une méthode d'excitation simultanée pluri-fréquentielle d'une pluralité d'électrodes dans le cadre d'un procédé de mesure par TIE.

Selon cette méthode, chaque électrode est appairée avec chacune des autres électrodes, formant ainsi un ensemble d'électrodes appairées. Une excitation est créée simultanément entre chaque paire d'électrodes en imposant un potentiel à ces électrodes, puis une mesure des propriétés électriques est réalisée.

La méthode décrite dans les publications [2], [3], [4] pour la TIE a été implémentée avec succès dans un prototype fonctionnel comportant un nombre de 16 électrodes, ce qui correspond à un ensemble de 120 électrodes appairées.

Cependant, cette méthode connaît plusieurs limitations.

Le fait de réaliser un nombre de 120 mesures simultanées sur les 120 électrodes appairées entraîne un degré de redondance important dans les données collectées. En conséquence, les opérations de mesure créent une quantité de données significativement supérieure au minimum nécessaire. De ce fait, l'exploitation des mesures est plus complexe à mettre en œuvre, notamment au niveau matériel. En particulier, la génération de 120 signaux d'excitation nécessite un réseau logique programmable coûteux comportant une mémoire particulièrement importante.

Ces redondances impliquent également l'utilisation d'un nombre élevé de fréquences d'excitation, soit 120 fréquences différentes, ce qui nécessite une large bande passante, de l'ordre de 500kHz pour une vitesse d'acquisition d'images optimisée à un nombre de 3906 images par seconde.

En outre, la mise en œuvre d'excitations par paires d'électrodes mène à l'obtention de données qui ne sont pas optimisées pour la résolution du problème inverse et la reconstruction des images.

Enfin, la vitesse d'acquisition des images avec ce procédé est limitée à un nombre de 3906 images par seconde.

Or, certaines applications demandent des vitesses d'acquisition significativement plus élevées. C'est par exemple le cas dans la surveillance d'installations nucléaires. La mesure d'écoulements diphasiques rapides, par exemple pour la surveillance de l'apparition de brèches dans les conduits de réacteurs nucléaires, requiert des séries de mesures effectuées à des vitesses d'acquisition de plus de 10 000 images par seconde.

La publication [6] décrit un procédé de mesure tomographique appelé ONESHOT. Selon ce procédé, chaque électrode est appairée avec chacune des autres électrodes, formant ainsi un ensemble d'électrodes appairées. La publication [7] décrit un procédé similaire au procédé de [6].

Il existe donc un besoin pour proposer un procédé de mesure par TIE qui remédie aux inconvénients de l'art antérieur, notamment pour améliorer la vitesse d'acquisition des images et pour optimiser la quantité de données générées et leur traitement.

Le but de l'invention est de répondre au moins partiellement à ce besoin.

**Exposé de l'invention**

Pour ce faire, l'invention est telle que définie dans la revendication 1.

Ainsi, le procédé de mesure consiste essentiellement à mettre en œuvre un multiplexage en fréquence dans lequel les signaux d'excitation sont imposés simultanément à toutes les électrodes.

Pour permettre la discrimination des signaux, chaque électrode est excitée par un signal de forme trigonométrique.

Le fait d'exciter toutes les électrodes simultanément évite la redondance que l'on retrouve dans les données obtenues en excitant séquentiellement les électrodes appairées.

Le procédé selon l'invention permet donc d'optimiser la taille des données générées et leur vitesse de traitement. Le nombre d'images par seconde obtenues est ainsi significativement amélioré.

De manière avantageuse, la forme trigonométrique des signaux d'excitation est particulièrement bien adaptée pour distinguer différents matériaux ayant une conductivité électrique similaire.

Selon une caractéristique avantageuse, l'ensemble des potentiels $V_n^{exc}$ vérifie la condition :

[Math 5]

$$\sum_{n=1}^{n_e} V_n^{exc}(t) = 0.$$

Préférentiellement, une image est produite à partir d'un algorithme de reconstruction itérative de moindre carré en une étape appliqué à la matrice de données signée.

Selon un mode de réalisation particulier, les électrodes sont équidistantes entre elles. Cela correspond au cas où $\theta_n = 2\pi\, n/n_e$. Autrement dit, les électrodes sont angulairement réparties de manière régulière autour de la périphérie du corps.

L'invention concerne également l'utilisation du procédé qui vient d'être décrit pour la mesure tomographique d'un écoulement diphasique, le corps étant un conduit d'installation nucléaire.

L'invention concerne enfin un dispositif tel que défini dans la revendication 6.

**Brève description des dessins**

[Fig 1] La figure 1 représente un dispositif de mise en œuvre du procédé de mesure selon l'invention.

[Fig 2] La figure 2 illustre des motifs cosinusoïdaux spatiaux.

[Fig 3] La figure 3 représente une partie de circuit électronique permettant l'excitation d'une électrode.

[Fig 4] La figure 4 illustre un procédé de génération des signaux d'excitation.

[Fig 5] La figure 5 illustre un procédé de mesure des signaux générés par les électrodes.

[Fig 6] La figure 6 représente sous forme graphique des signaux d'excitation et certaines de leurs propriétés.

[Fig 7] La figure 7 illustre une matrice de signe pour un dispositif comportant 16 électrodes.

[Fig 8] La figure 8 illustre une matrice de signe pour un dispositif comportant 32 électrodes.

**Description détaillée**

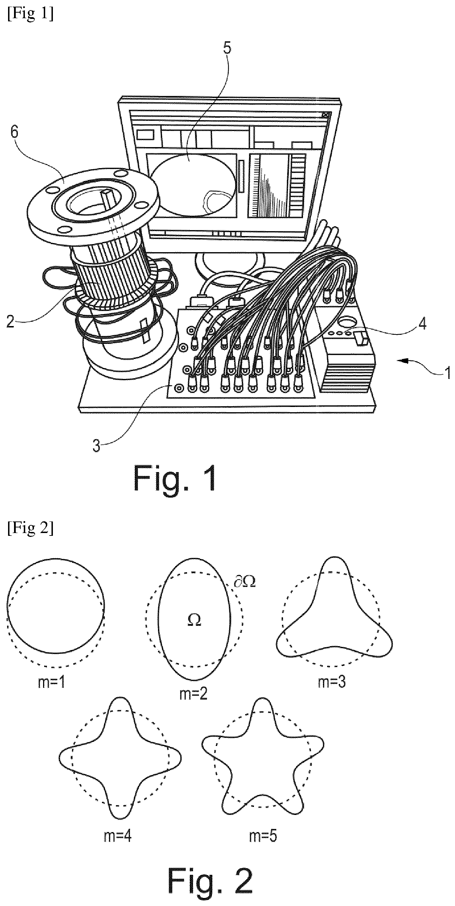

On a illustré en figure 1 un dispositif 1 de mise en œuvre du procédé de mesure par TIE selon l'invention.

Le procédé vise à effectuer des mesures par TIE d'un corps 6 contenant un fluide.

Le dispositif 1 comporte un nombre de 16 électrodes référencées 2 disposées de façon non-intrusive sur une périphérie circulaire du corps 6. Les électrodes 2 sont de préférence angulairement réparties de manière régulière autour de la périphérie du corps 6.

Les électrodes 2 sont reliées à un circuit imprimé 3, lui-même connecté à un système d'acquisition de données 4. Un écran 5 permet de visualiser les données et les images produites à partir de ces données. Le système d'acquisition de données 4 contient le système d'exploitation linux (HÔTE) qui contrôle un réseau logique programmable FPGA, également contenu dans le système d'acquisition de données 4.

Le système d'acquisition 4 permet de générer les signaux analogiques d'excitation et de mesurer les signaux analogiques de mesure en provenance des électrodes 2.

Le système 4 comporte par exemple un contrôleur cRIO-9039 du fabricant National Instruments qui inclut un réseau logique programmable, des modules NI-9262 du fabricant National Instruments pour la génération des signaux analogiques d'excitation et des modules NI-9223 du fabricant National Instruments pour la mesure des signaux analogiques en provenance des électrodes 2.

On décrit à présent la mise en œuvre du procédé de mesure selon l'invention avec un dispositif tel que celui représenté en figure 1.

Dans une première étape du procédé de mesure, on agence un nombre $n_e$ d'électrodes 2 autour d'une périphérie d'une partie cylindrique du corps 6.

*Excitation des électrodes*

Dans une deuxième étape du procédé de mesure, les électrodes sont excitées simultanément par un potentiel ayant une forme bien choisie.

Les électrodes 2 constituent un ensemble d'électrodes linéairement indépendantes. Elles sont utilisées pour créer des excitations électriques sur la surface du corps et pour en mesurer les propriétés électriques.

Pour un nombre de $n_e$ électrodes, il existe ($n_e$ - 1) motifs linéairement indépendants d'excitation. Les fonctions de base de Fourier constituent un choix naturel pour décrire ces motifs linéairement indépendants, selon l'équation :

[Math 2]

$$\frac{1}{\sqrt{2\pi}} e^{in\theta}$$

Le procédé selon l'invention consiste à exciter simultanément l'ensemble des électrodes à l'aide d'excitations de forme trigonométrique.

Cet ensemble d'excitations simultanées est décomposé en oscillations spatiales selon la base de Fourier et en oscillations temporelles.

Différentes fréquences sont imposées afin d'établir une distinction entre les différents signaux trigonométriques en multiplexage fréquentiel.

Pour chaque motif d'excitation trigonométrique, chaque électrode $E_n$ est associée à une tension statique $V_n^{sta}$.

L'ensemble des $n_e$ tensions statiques $V_n^{sta}$ forme un ensemble de fonctions sinusoïdales et cosinusoïdales ayant différentes fréquences spatiales m.

La figure 2 représente les motifs cosinusoïdaux spatiaux pour m variant de 1 à 5. Les motifs sinusoïdaux ne sont pas représentés.

Les $n_e$ électrodes sont agencées sur la périphérie $\partial\Omega$ du corps, représentée par les traits discontinus en figure 2. Les lignes continues représentent le potentiel d'excitation imposé aux électrodes.

Le potentiel statique $V_{n,m}^{sta}$ associé à chaque électrode $E_n$ est défini par l'équation suivante, pour n compris entre 1 et $n_e$ :

[Math 3]

$$V_{n,m}^{sta} = A \left[ \delta_m^{\mathbb{O}} \cos(m\theta_n) + \delta_m^{\mathbb{E}} \sin\left(\frac{m\theta_n}{2}\right) \right],$$

où :

[Math 3a]

$$\text{où } m \in 1, \ldots, (n_e - 1) \text{représente la fréquence spatiale,}$$
$$\mathbb{O} = \{2k + 1 : k \in \mathbb{N}\} \text{ est l'ensemble des entiers impairs,}$$
$$\mathbb{E} = \{2k : k \in \mathbb{N}^*\} \text{ est l'ensemble des entiers pairs non nuls,}$$
$$\delta \text{ est le symbole de Kronecker avec } \delta_m^{\mathbb{O}} = 1 \text{ si } m \in \mathbb{O} \text{ et } \delta_m^{\mathbb{O}} = 0 \text{ sinon,}$$
$$\theta_n = 2\pi i_e \text{ est la coordonnée angulaire de l'électrode } E_n,$$
$$A \text{ est l'amplitude de la tension imposée.}$$

Pour un ensemble donné de $n_e$ électrodes, tous les motifs d'excitation indépendants sont entièrement décrits avec ($n_e$ - 1) fréquences spatiales différentes.

Pour le cas particulier où $\theta_n = 2\pi$ n/$n_e$, les électrodes sont réparties de manière régulière sur la périphérie du corps.

Chaque fréquence spatiale m est associée à une fréquence temporelle $f_m$ et est imposée de manière simultanée à chacune des électrodes.

Ainsi, chaque potentiel simultané d'excitation $V_n^{exc}$ comporte une superposition de ($n_e$ - 1) fonctions trigonométriques, chaque fonction oscillant à une fréquence particulière $f_m$. Le signal d'excitation d'une électrode n est $V_n^{exc}$, défini par l'équation suivante :

[Math 4]

$$V_n^{exc}(t) = \sum_{m=1}^{n_e} \cos(2\pi f_m t) V_{n,m}^{sta}$$
$$= A \sum_{m=1}^{n_e} \cos(2\pi f_m t) \left[ \delta_m^{\mathbb{O}} \cos(m\theta_n) + \delta_m^{\mathbb{E}} \sin\left(\frac{m\theta_n}{2}\right) \right].$$

Le procédé selon l'invention comporte une étape consistant à imposer de manière simultanée chaque potentiel $V_n^{exc}(t)$ ainsi défini à chaque électrode $E_n$.

On veille à ce que la somme des tensions d'excitation des $n_e$ électrodes soit nulle quel que soit le temps t. Cela se traduit par la condition :

[Math 5]

$$\sum_{n=1}^{n_e} V_n^{exc}(t) = 0.$$

*Mesure des propriétés électriques du corps*

Dans une troisième étape du procédé de mesure, on procède à la mesure des propriétés électriques du corps 6 à l'aide des électrodes 2.

Un ordinateur contrôle le réseau logique programmable du système d'acquisition 4 de sorte à générer 16 signaux d'excitation ayant les propriétés décrites. Ces 16 signaux numériques sont transformés en signaux analogiques avec les modules NI-9262 et transmis par câbles coaxiaux aux électrodes 2.

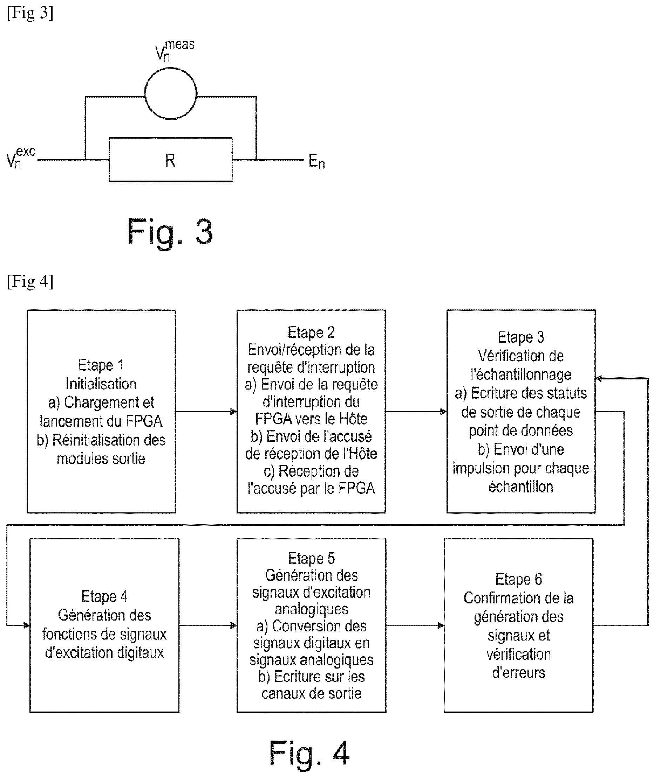

Le circuit imprimé 3 comporte un circuit d'excitation de chaque électrode 2, chacun de ces circuits comportant une résistance R comme illustré en figure 3. Comme visible sur cette figure, le potentiel $V_n^{exc}$ est imposé d'un côté de la résistance R, l'autre côté étant connecté à l'électrode $E_n$.

La condition aux limites de Neumann à l'électrode $E_n$ est le courant $I_n$ passant dans le circuit d'excitation. Ce courant est obtenu par la mesure de tension $V_n^{meas} = R I_n$ aux bornes de la résistance. Comme pour $V_n^{exc}$, ce signal est une somme de fonctions trigonométriques.

### Traitement des données

Dans une quatrième étape du procédé de mesure, les données mesurées lors de la troisième étape sont traitées afin d'obtenir une matrice de données signée représentative d'une image.

### Génération des points de données $M_n$

Dans une première sous-étape de la quatrième étape du procédé de mesure, les points de données $M_n$ sont calculés pour chaque électrode n.

La transformée de Fourier du signal mesuré $V_n^{meas}$ est calculée à partir d'une séquence de mesure de courant à P-points $I_n(p)$, où p est le temps discret et vérifie $0 \le p \le P$, soit :

[Math 6]

$$X_n(k) = \mathcal{F}[I_n(p)] = \frac{\theta}{R} \sum_{p=0}^{P-1} V_n^{meas}(p) e^{ik\beta_p}$$

$$\text{où } \beta_p = \frac{2\pi p}{P}, \text{i} = \sqrt{-1} \text{ et le facteur de normalisation } \theta = \frac{1}{P}.$$

La transformée de Fourier peut être calculée à la fréquence $f_1$ qui correspond à la fréquence à laquelle P coefficients de Fourier sont calculés.

Les fréquences $f_m$ des tensions $V_n^{exc}$ sont choisies pour être des harmoniques de $f_1$. Cela permet de distinguer les signaux mesurés. Ainsi, chaque coefficient k est associé à une fréquence particulière $f_m$.

Les données sont alors générées à une fréquence $f_1$ et la résolution dans l'espace de Fourier est $\Delta f = f_{m+1} - f_m = f_1$. On peut noter que la fréquence la plus élevée est choisie pour être inférieure à la fréquence de Nyquist du système $f_{Nyq} = 1/2 \Delta p$, où $\Delta p$ est le temps d'échantillonnage.

Les points de données $M_n(k)$ sont les modules de chaque coefficient de Fourier k pour chaque électrode n :

[Math 7]

$$M_n(k) = \frac{1}{RP} \left| \sum_{p=0}^{P-1} V_n^{meas}(p) e^{ik\beta_p} \right|$$

Chaque point de données définit le courant d'un motif trigonométrique donné à une électrode donnée. L'ensemble des points de données $M_n(k)$ pour tous n et tous k constitue les données de mesure.

Les fréquences d'excitation sont déterminées de la façon suivante. La fréquence d'échantillonnage $f_{DAQ}$ du système d'acquisition des données limite la fréquence $f_m$ maximale des tensions $V_n^{exec}$, la fréquence de Nyquist $f_{Nyq} = f_{DAQ}/2$ constituant une limite supérieure.

Pour un système d'acquisition de données tel que $f_{DAQ} = 1$ MS/s, la fréquence de Nyquist est égale à 500 kHz.

Pour tirer parti des faibles erreurs de la tension résiduelle résultant de l'énergie stockée dans l'impédance de contact électrode - électrolyte, des signaux continus doivent être fournis. Pour générer des signaux continus à différentes fréquences, les signaux sont choisis pour être des harmoniques de la fréquence générée la plus basse $f_1$.

Lorsque l'on arrête d'imposer le potentiel sur une électrode, une partie de l'énergie électrique est stockée pendant quelques dizaines de microsecondes à l'interface entre l'électrode et le milieu. Ce phénomène d'impédance de contact entraine une erreur dans la mesure et implique la nécessité d'introduire un temps mort entre deux excitations successives pour attendre que cette énergie se dissipe. La génération de signaux continus a pour avantage de ne jamais désexciter les tensions imposées et donc d'éviter les erreurs liées à l'impédance de contacts ainsi que la nécessité d'introduire des temps morts.

Avec un nombre de 16 électrodes, on génère un ensemble de signaux d'excitation à 15 fréquences différentes. Considérant le taux d'échantillonnage du système d'acquisition, par exemple de 1 MS/s, les fréquences peuvent être choisies telles que $f_i = i * f_0$ où $f_0$ est la fréquence fondamentale et $i$ est compris entre 1 et 15.

En outre, les transformées de Fourier discrètes peuvent être choisies pour être faites à P = 32 points car on ne considère que les résultats positifs. Cela résulte en un taux d'acquisition des données d'images de $1 * 10^6 / 32 = 31\,250$ images par seconde. Ce choix implique que la fréquence de signal sinusoïdal la plus basse $f_1$ doit être égale à celle de la fréquence de calcul des transformées de Fourier discrètes. La fréquence la plus élevée $f_{15} = 15 * f_0$ est de 468,875 kHz, soit en-dessous de la limite de Nyquist de 500 kHz du système considéré.

Les amplitudes d'excitation sont déterminées de la façon suivante.

La génération de tension et les modules d'acquisition fonctionnent dans un intervalle de $\pm$ 10 V. Considérant les tensions $V_n^{exc}$, l'amplitude A des sinusoïdes doit être significativement plus faible que la somme des sinusoïdes générée en raison des interférences constructives. Toutefois, l'amplitude A du signal doit être aussi grande que possible pour minimiser le signal-sur-bruit.

Une autre limite à prendre en considération est la variation maximale autorisée entre deux potentiels générés successivement. Un contrôle en temps réel dans le système d'acquisition permet de choisir une valeur satisfaisante de A = 0,15 V, qui donne des pics de résonance à $\pm$ 2,25 V. La transition rapide entre des valeurs positives et négatives du signal empêche l'apparition d'effets électrolytiques. Par exemple, un phénomène d'électrolyse dans l'eau apparaît lorsque l'on impose une tension continue supérieure à 1,2 V. Ce phénomène n'apparaît pas pour des tensions alternatives supérieures à 1,2 V si ces tensions varient suffisamment rapidement.

*Obtention d'une matrice de données D*

Dans une deuxième sous-étape, une matrice de données D est obtenue à partir des points de données $M_n$.

Pour le système considéré à 16 électrodes et utilisant les modules NI-9223, un format de données en virgule fixe de 20 bits alloués au nombre, y compris 5 bits pour les chiffres de précision, peut être utilisé. L'index n des électrodes, compris entre 1 et 16, et le coefficient de Fourier k, compris entre 1 et 15, peuvent être décrits par des nombres binaires codés sur 4 bits.

Pour un système à 32 électrodes, chaque module de point de donnée $M_n(k)$ est codé avec les nombres n et k sous la forme suivante :

[Math 8]

$$M_n(k) = \underbrace{\langle +,8,0 \rangle}_{k} + \underbrace{\langle +,8,0 \rangle}_{n} + \underbrace{\langle \pm,16,11 \rangle}_{M},$$

où le format à virgule fixe <s, b, p> est utilisé avec s : signé/non signé ; b : nombre de bits alloués ; p : nombre de bits pour la précision . Les données $M_n(k)$ sont encodées au format U32.

Les $n_e$ points de données mesurés sur les $n_e$ électrodes pour un coefficient de Fourier k donné, c'est-à-dire pour une fréquence donnée $f_m$, donnent le vecteur de données suivant :

[Math 9]

$$\{M_n(k)\} = (M_1(k) \quad M_2(k) \quad M_3(k) \quad ... \quad M_{n_e}(k))$$

où les $M_n(k)$ sont des entiers encodés au format U32.

Les $n_e$ - 1 vecteurs peuvent être concaténés en une matrice de données D :

[Math 10]

$$\mathbf{D} = \begin{pmatrix} \{M_n(1)\} \\ \{M_n(2)\} \\ \{M_n(3)\} \\ \vdots \\ \{M_n(n_e - 1)\} \end{pmatrix}.$$

La taille des données est alors S = $n_e$ ($n_e$ - 1).

Seuls les modules des transformées de Fourier font partie des données.

Pour une image, la taille des données est S * 32 bits = 4 kB. En comparaison, le procédé décrit dans les publications [2], [3], [4] aboutit à 127 kB de données pour une image, sans information supplémentaire sur les conditions aux limites.

Ainsi, le procédé selon l'invention permet un taux d'acquisition d'images plus important et permet également de réduire la taille des données d'un facteur $n_e$ / 2 par rapport au procédé décrit dans les publications [2], [3], [4].

*Obtention d'une matrice de données signée*

Dans une troisième sous-étape, on obtient une matrice de données signée, qui est représentative d'une image.

Les transformées de Fourier donnent un module et une phase. Le signe de chaque point de donnée est estimé à partir de la phase.

Ainsi, considérant un signal d'excitation imposé à chaque électrode $E_n$ à une fréquence $f_m$ ayant la forme :

[Math 11]

$$V_{n,m}^{exc}(t) \;=\; A\cos(2\pi f_m t)\left[\delta_m^{\mathbb{O}}\cos(m\theta_n) + \delta_m^{\mathbb{E}}\sin\left(\frac{m\theta_n}{2}\right)\right],$$

La phase du signal s'exprime :

[Math 12]

$$\phi_n^V(k) \;=\; \arctan\left(\frac{-\sum_{p=0}^{P-1} V_{n,m}^{meas}(p)\sin(k\beta_p)}{\sum_{p=0}^{P-1} V_{n,m}^{meas}(p)\cos(k\beta_p)}\right).$$

La phase du courant $I_1^{meas}(t)$ mesuré à l'électrode $E_1$ à la fréquence $f_m$ est :

[Math 13]

$$\phi_l^I(k) \;=\; \arctan\left(\frac{-\sum_{p=0}^{P-1} I_l^{meas}(p)\sin(k\beta_p)}{\sum_{p=0}^{P-1} I_l^{meas}(p)\cos(k\beta_p)}\right).$$

En supposant un échantillonnage synchrone entre l'entrée du signal analogique AI et la sortie du signal échantillonné AO, le décalage de phase entre le potentiel d'excitation et le courant mesuré est :

[Math 14]

$$\Phi_{n,l}(k) = \phi_n^I(k) - \phi_l^V(k).$$

Le décalage de phase dépend de la conception des capteurs TIE et de la nature de l'écoulement au sein du corps. Si le décalage de phase est important, des effets d'enveloppement peuvent rendre la reconstruction du signe des données impossible. En effet, la phase est symétrique à une transformation de $2\pi N$, où N est un entier. Si la phase est supérieure à

$2\pi$, elle est enveloppée sur elle-même.

Les deux cas suivants ont été identifiés :

[Math 15]

$$\left| \Phi_{n,l}(k) \right| < \frac{\pi}{2} \text{ et } \left| \Phi_{n,l}(k) \right| \geq \pi/2.$$

Dans le premier cas, le signe des points de données est calculé à partir de l'équation précédente. L'élément de la matrice de données signée correspondant au k-ième coefficient de Fourier et à la n-ième électrode est alors :

[Math 16]

$$\tilde{D}_n^m \;=\; \frac{\sin\left(\Phi_{n,l}(k)\right)}{\left|\sin\left(\Phi_{n,l}(k)\right)\right|} D_n^m.$$

Dans le deuxième cas, les effets d'enveloppement empêchent l'estimation du signe de $D_n^k$. On introduit alors une matrice de signe $\Sigma$ pour allouer un signe arbitraire aux données.

La matrice de signe $\Sigma$ est estimée à partir du signe du signal d'excitation à t = 0 pour une harmonique donnée à une électrode donnée par l'introduction de la fonction de signe :

[Math 17]

$$\Sigma_{n,m} \;=\; \begin{cases} 1 & \text{si } V_n^{meas} > 0, \\ 0 & \text{si } V_n^{meas} = 0, \\ -1 & \text{si } V_n^{meas} < 0, \end{cases}$$

avec $V_n^{meas}$ tel que défini précédemment.

La matrice de signe $\Sigma$ est plus particulièrement définie de sorte que ses lignes représentent les signes d'une fonction cosinus en alternance avec ceux d'une fonction sinus ayant un nombre entier de périodes sur chaque ligne. Les deux premières lignes ont une unique période et le nombre de périodes augmentant d'une unité pour chaque paire de lignes suivantes.

Autrement dit, les lignes de la matrice de signe $\Sigma$ sont définies telles que le i-ième élément de la j-ième ligne est le signe de cosinus([2$\pi$/([j+1]/2)]*(i-1)/$n_e$) pour j impair et sinus([2$\pi$/(j/2)]*(i-1)/$n_e$) pour j pair.

Par exemple, le premier élément de la première ligne de la matrice de signe est le signe de cosinus(0), soit +. Pour un nombre d'électrodes $n_e$ égal à 16, le signe du cinquième élément de la première ligne est le signe de cosinus(2$\pi$*[4/16]), soit 0.

Ainsi, la première ligne de la matrice de signe représente les signes d'une période d'une fonction cosinus, soit les signes de cosinus(2$\pi$*(i-1)/$n_e$) pour le i-ième élément de la ligne. La deuxième ligne représente les signes d'une période d'une fonction sinus, soit les signes de sinus(2$\pi$*(i-1)/$n_e$). La troisième ligne représente les signes de deux périodes d'une fonction cosinus, soit les signes de cosinus([2$\pi$/2]*(i-1)/$n_e$). La quatrième ligne représente les signes de deux périodes d'une fonction sinus, soit les signes de sinus([2$\pi$/2]*(i-1)/$n_e$). La cinquième ligne représente les signes de trois périodes d'une fonction cosinus, soit les signes de cosinus([2$\pi$/3]*(i-1)/$n_e$), et ainsi de suite jusqu'à la ($n_e$-1)-ième ligne.

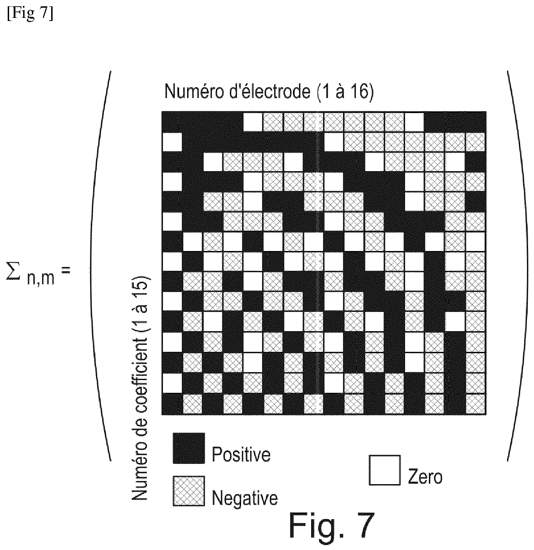

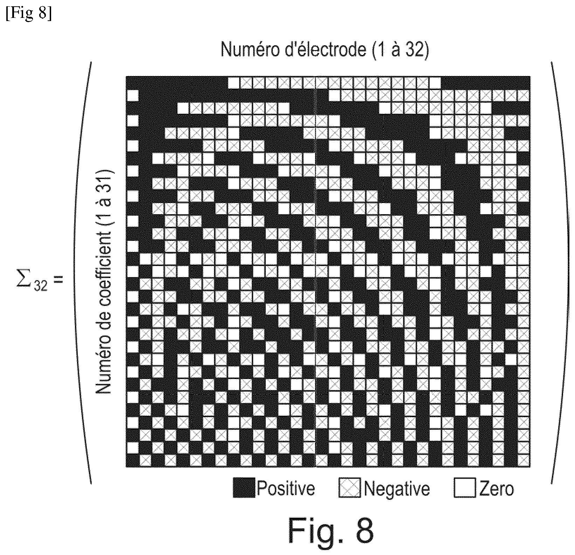

Par exemple, pour un dispositif à 16 électrodes, la matrice de signe prend la forme illustrée en figure 7. Pour un dispositif à 32 électrodes, la matrice de signe prend la forme illustrée en figure 8.

L'utilisation d'une telle matrice de signe permet d'optimiser le traitement des données pour former une image. Elle permet d'estimer le signe de chaque point de donnée et de reconstruire une image.

Pour un décalage de phase important, c'est-à-dire supérieur ou égal à $\pi/2$, les amplitudes signées arbitrairement des $n_e$ - 1 motifs d'excitation des $n_e$ électrodes, autrement dit les éléments de la matrice de données signée correspondants au k-ième coefficient de Fourier et à la n-ième électrode, sont donnés par :

[Math 18]

$$\tilde{D}_n^m \;=\; \Sigma_n^m D_n^m.$$

*Implémentation algorithmique*

La partie HÔTE du système d'acquisition 4 envoie en continu les paramètres de fréquences et d'amplitudes au FPGA du système d'acquisition 4.

La figure 4 illustre un algorithme de génération des signaux d'excitation des 16 électrodes 2.

Avec le système considéré, le FPGA reçoit les points de données 16 par 16 dans une boucle cadencée à 1 MS/s pour créer 16 signaux analogiques.

Dans une première étape, le système est initialisé.

Au départ, le FPGA est vide. L'HÔTE charge le FPGA puis les modules NI-9262 sont réinitialisés.

Dans une deuxième étape, une requête d'interruption est envoyée et reçue.

Une interruption matérielle est utilisée pour avertir l'HÔTE lorsque le FPGA est prêt à commencer l'acquisition de données. Le FPGA attend la validation de l'HÔTE pour commencer l'acquisition.

Dans une troisième étape, une vérification de l'échantillonnage est effectuée.

Une fonction de génération d'impulsion d'échantillon est appelée pour commencer la génération des points de données. La fréquence à laquelle la fonction est appelée détermine le taux d'échantillonnage pour la génération des points de données. En parallèle, une fonction d'écriture de statut d'E/S est appelée à la même fréquence pour vérifier le statut de chaque échantillon généré.

Dans une quatrième étape, des fonctions de signaux d'excitation digitaux sont générés.

L'HÔTE commande le FPGA pour commencer la génération des fonctions des signaux d'excitation.

Dans une cinquième étape, les signaux d'excitation analogiques sont générés. Les seize signaux d'excitation sont envoyés aux électrodes.

Dans une sixième étape, l'HÔTE confirme la génération des signaux et signale d'éventuelles erreurs au niveau de l'HÔTE ou du FPGA.

Les étapes 1 et 2 sont effectuées une fois au lancement de l'algorithme. Les étapes 3 à 6 son itérées pour chaque point de sortie à la fréquence d'échantillonnage.

La fréquence d'échantillonnage peut être comprise entre 10 kHz et 500 MHz, de préférence entre 500 kHz et 50 MHz.

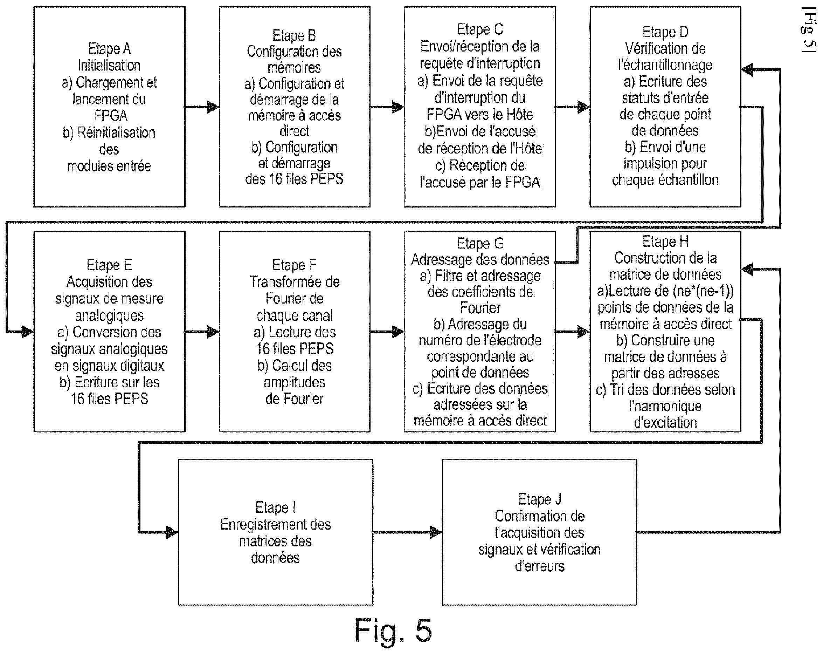

La figure 5 représente un algorithme de traitement des données reçues des électrodes 2.

La mesure de tensions aux bornes des résistances R permet de déduire les conditions aux limites de Neumann pour la mise en œuvre de l'algorithme de reconstitution d'image. Le taux d'acquisition de 1 MS/s sur 16 canaux correspond à un taux de transfert de données de 320 MB/s.

L'utilisation de transformées de Fourier rapides, en considérant uniquement les coefficients de Fourier liés à un signal généré, permet de réduire la taille des données sans impacter leur qualité. Cela agit également comme un filtre de bande efficace. Cependant, le calcul en temps réel de 16 transformées de Fourier rapides requiert une capacité de calcul élevée. Le FPGA, qui autorise la transformation en temps réel et en parallèle des signaux en leurs composants de Fourier sur plusieurs canaux, est un outil adapté à la réalisation de cette tâche.

Dans une première étape A, le système est initialisé.

Le FPGA réinitialise les modules d'acquisition de signaux analogiques NI-9223.

Dans une seconde étape B, les mémoires sont configurées.

L'HÔTE configure et démarre un accès direct à la mémoire du FPGA. Le FPGA configure et démarre seize files d'attentes premier entré premier sorti pour assurer la communication des seize canaux de mesure avec leurs calculs de transformées de Fourier rapides.

Dans une troisième étape C, une requête d'interruption est envoyée et reçue.

Une interruption matérielle permet de s'assurer que les files d'attente et l'accès direct à la mémoire sont prêts.

Dans une quatrième étape D, l'échantillonnage est vérifié.

Une fonction de génération d'impulsion d'échantillon est appelée pour contrôler la fréquence d'échantillonnage et une fonction de lecture de statut d'E/S est appelée à la même fréquence pour vérifier le statut de chaque échantillon et signaler une erreur éventuelle à l'HÔTE.

Dans une cinquième étape E, les signaux de mesure analogiques sont acquis.

La fonction de lecture d'E/S est configurée pour lire un unique échantillon de chaque canal de chaque module NI-9223. Cette fonction est appelée à 1 MHz et régulée par la fonction de génération d'impulsion d'échantillon.

Dans une sixième étape F, la transformée de Fourier rapide de chaque canal est calculée dans une boucle à 1 MHz. Le temps de calcul est déterminé par le nombre P de points considérés pour la transformée de Fourier. Une fois les P points de données mesurées transférés pour les calculs de transformée de Fourier, la fonction restitue les P coefficients de Fourier un par un à chaque itération de la boucle de transformée de Fourier. Dans un second temps, les amplitudes des coefficients de Fourier sont calculées à une fréquence de 1 MHz.

Dans une septième étape G, l'adressage des données est effectué.

Les points de données d'amplitude au format U32 forment avec le coefficient de Fourier (au format U16) correspondant et le canal correspondant (au format U16) un élément de donnée au format U64. A chaque itération de la boucle de transformée de Fourier, 16 éléments pour les 16 canaux sont écrits dans la mémoire à accès direct pour être transmis à l'HÔTE.

Dans une huitième étape H, la matrice de données est construite.

L'HÔTE attend que la mémoire à accès direct collecte au moins 240 éléments, représentant une image de données complète. L'adresse de la n-ième électrode et le coefficient de Fourier associé avec l'amplitude sont utilisés pour former la matrice de données D.

Dans une neuvième étape I, les matrices de données sont enregistrées.

Les données sont utilisées pour effectuer une reconstruction d'image en temps réel ou pour être enregistrées. L'image est basée sur un algorithme de reconstruction itérative de moindre carré en une étape, par exemple l'algorithme décrit dans la publication [5].

La reconstruction d'images en temps réel peut générer de l'ordre d'une centaine d'images par seconde.

Dans une dixième étape J, l'acquisition des signaux est confirmée et une vérification d'erreurs est effectuée.

La synchronisation des modules de génération et de mesure de signaux analogiques est vérifiée et les éventuelles erreurs sont signalées.

Les étapes A à C sont effectuées une fois au lancement de l'algorithme. Les étapes D à G sont itérées pour chaque point de sortie à la fréquence d'échantillonnage. Une fois qu'une matrice complète de données contenant $n_e*(n_e-1)$ points de données est acquise, l'algorithme passe à l'étape H. Les étapes H à J sont itérées à la fréquence d'acquisition des images.

La fréquence d'échantillonnage peut être comprise entre 10 kHz et 500 MHz, de préférence entre 500 kHz et 50 MHz.

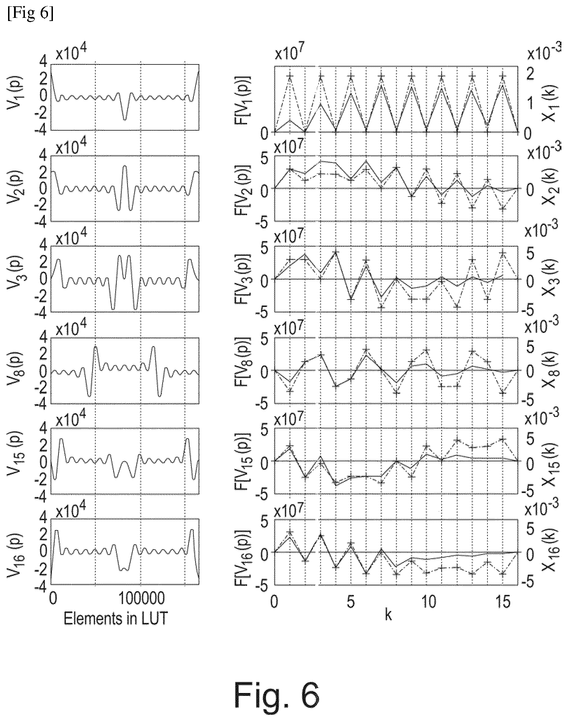

La figure 6 représente, sur les graphiques de la partie gauche, les signaux d'excitation pour six des seize électrodes 2. Chaque signal est constitué d'une somme de 15 fonctions sinusoïdales.

Les lignes continues des graphiques de droite de la figure 6 représentent, dans l'espace de Fourier équivalent, les amplitudes des tensions mesurées $V^{meas}$ au niveau des résistances R représentées en figure 2, avec R = 200 $\Omega$. Les lignes discontinues représentent les transformées de Fourier des tensions des signaux générés.

L'invention n'est pas limitée aux exemples qui viennent d'être décrits ; on peut notamment combiner entre elles des caractéristiques des exemples illustrés au sein de variantes non illustrées tel que défini dans les revendications annexées.

En particulier, le procédé selon l'invention peut être mis en œuvre au moyen d'autres systèmes d'acquisition que celui décrit.

**Liste des références cités**

[1] Teague, G. (2002). Mass flow measurement of multi-phase mixtures by means of tomographic techniques. University of Cape Town, Faculty of Engineering, Department of Electrical Engineering.

[2] Dupré, A., Mylvaganam, S. (2017). Simultaneous and Continuous Excitation Strategy for High Speed EIT : the ONE-SHOT method. In Proceedings of the 9th World Congress on Industrial Process Tomography, pages 667 - 674.

[3] Darnajou, M., Dupré, A., Dang, C., Ricciardi, G., Bourennane, S., Bellis, C. (2019). On the implementation of simultaneous multi-frequency excitations and measurements for electrical impedance tomography. Sensors, 19(17).

[4] Darnajou, M., Dupré, A., Dang, C., Ricciardi, G., Bourennane, S., Bellis, C., Mylvaganam, S. (2020). High Speed EIT with Multifrequency Excitation using FPGA and Response Analysis using FDM. IEEE Sensors.

[5] https://www.math.colostate.edu/~siamesu/files/NOSER.pdf

[6] Darnajou M. et al: "High Speed EIT With Multifrequency Excitation Using FPGA and Response Analysis Using FDM", IEEE SENSORS JOURNAL, IEEE, USA, vol. 20, no. 15, 30 mars 2020 (2020-03-30), pages 8698-8710, XP011797306, ISSN: 1530-437X, DOI: 10.1109/JSEN.2020.2984388 [extrait le 2020-07-02].[7] Dupre A. et al: "A Simultaneous and Continuous Excitation Method for High-Speed Electrical Impedance Tomography with Reduced Transients and Noise Sensitivity", Sensors, 28 mars 2018 (2018-03-28), pages 1-18, XP055865628,

**Revendications**

1. Procédé de mesure tomographique par impédance électrique d'un corps (6) comportant une partie cylindrique contenant un fluide, comportant les étapes suivantes :

   i. agencement d'un nombre $n_e$ d'électrodes (2) autour d'une périphérie de la partie cylindrique du corps,
   ii. excitation simultanée de chacune des $n_e$ électrodes, chaque électrode étant excitée par un potentiel $V_n^{exc}$ ayant la forme :

   [Math 1]

   $$V_n^{exc}(t) \quad = A \sum_{m=1}^{n_e} \cos\left(2\pi f_m t\right) \left[\delta_m^{\mathbb{O}} \cos(m\theta_n) + \delta_m^{\mathbb{E}} \sin\left(\frac{m\theta_n}{2}\right)\right]$$

   où A est une amplitude de signal, $\theta_n$ est la position angulaire de l'électrode n, $f_m = m * f_0$ est une fréquence d'oscillation, $f_0$ est une fréquence fondamentale choisie telle que $f_m$ soit inférieure à la fréquence de Nyquist du système pour tout m, $\delta$ est le symbole de Kronecker, et

   [Math 19]

   $$\mathbb{O} = \{2k + 1 : k \in \mathbb{N}\} \text{ est l'ensemble des entiers impairs}$$

   [Math 20]

   $$\mathbb{E} = \{2k : k \in \mathbb{N}^*\} \text{ est l'ensemble des entiers pairs non nuls.}$$

   iii. mesure des signaux électriques analogiques en provenance des électrodes $V_n^{meas}$ du corps,
   iv. traitement des données issues de l'étape iii de mesure, comportant les sous-étapes suivantes :

   a) pour chaque électrode $E_n$, calcul des points de données $M_n$ définis par :

   [Math 7]

   $$M_n(k) \quad = \frac{1}{RP} \left|\sum_{p=0}^{P-1} V_n^{meas}(p) e^{ik\beta_P}\right|$$

   où R est la valeur de la résistance utilisée pour la mesure de $V_n^{meas}$ avec $V_n^{meas} = R\, I_n$ aux bornes de la résistance, P est le nombre de points d'une séquence discrète de mesure du courant $I_n$, p est le temps discret, k est un coefficient de Fourier compris entre 1 et ($n_e$ - 1) et $\beta_p = (2\pi p/P)$,
   b) constitution d'une matrice de données D à partir des points de données $M_n(k)$ pour tout n et pour tout k, selon l'équation :

[Math 10]

$$\mathbf{D} = \begin{pmatrix} \{M_n(1)\} \\ \{M_n(2)\} \\ \{M_n(3)\} \\ \vdots \\ \{M_n(n_e - 1)\} \end{pmatrix}.$$

c) constitution d'une matrice de données signée dont les éléments sont définis par l'équation suivante lorsque le décalage de phase $\Phi_{n,1}(k)$ entre le potentiel d'excitation à l'électrode 1 et le courant mesuré à l'électrode n est inférieur à $\pi/2$ :

[Math 16]

$$\widetilde{D}_n^m = \frac{\sin\left(\Phi_{n,l}(k)\right)}{\left|\sin\left(\Phi_{n,l}(k)\right)\right|} D_n^m.$$

et dont les éléments sont définis par l'équation suivante lorsque le décalage de phase $\Phi_{n,1}(k)$ entre le potentiel d'excitation à l'électrode 1 et le courant mesuré à l'électrode n est supérieur ou égal à $\pi/2$ :

[Math 18]

$$\widetilde{D}_n^m = \Sigma_n^m D_n^m.$$

où $\Sigma$ est une matrice de signe définie de telle sorte que le i-ième élément de la j-ième ligne de $\Sigma$ est le signe de cosinus($[2\pi/([j+1]/2)]*(i-1)/n_e$) pour j impair et le signe de sinus($[2\pi/(j/2)]*(i-1)/n_e$) pour j pair.

2. Procédé selon la revendication 1, l'ensemble des potentiels $V_n^{exc}$ vérifiant la condition :

[Math 5]

$$\sum_{n=1}^{n_e} V_n^{exc}(t) = 0.$$

3. Procédé selon la revendication précédente, une image étant produite à partir d'un algorithme de reconstruction itérative de moindre carré en une étape appliqué à la matrice de données signée.

4. Procédé selon l'une des revendications précédentes, les électrodes étant angulairement réparties de manière régulière autour de la périphérie du corps.

5. Utilisation du procédé selon l'une des revendications précédentes pour la mesure tomographique d'un écoulement diphasique, le corps étant un conduit d'installation nucléaire.

6. Dispositif pour la mise en œuvre d'un procédé de mesure tomographique par impédance électrique d'un corps, comportant une partie cylindrique contenant un fluide, le dispositif comportant :

   - un système d'acquisition (4) comportant au moins un réseau logique programmable, un module de génération de signaux analogiques et un module de mesure de signaux analogiques ;
   - un ordinateur configuré pour contrôler le système d'acquisition ;
   - une pluralité d'électrodes (2) connectées au système d'acquisitior; le dispositif étant configuré pour la mise en œuvre du procédé selon l'une des revendications 1 à 4.

**Patentansprüche**

1. Verfahren zur tomographischen Messung mittels elektrischer Impedanz eines Körpers (6) mit einem zylindrischen Teil, der ein Fluid enthält, das die folgenden Schritte aufweist:

   i. Anordnen einer Anzahl $n_e$ von Elektroden (2) um einen Umfang des zylindrischen Teils des Körpers,
   ii. gleichzeitiges Ansteuern jeder der $n_e$ Elektroden, wobei jede Elektrode durch ein Potential $V_n^{exc}$ angesteuert wird, das die folgende Form aufweist:

   [Math 1]

$$V_n^{exc}(t) \;=\; A \sum_{m=1}^{n_e} \cos\left(2\pi f_m t\right) \left[\delta_m^{\mathbb{O}}\cos(m\theta_n) + \delta_m^{\mathbb{E}}\sin\left(\frac{m\theta_n}{2}\right)\right]$$

   wobei A eine Signalamplitude ist, $\theta_n$ die Winkelposition der Elektrode n ist, $f_m = m * f_0$ eine Schwingungsfrequenz ist, $f_0$ eine Grundfrequenz ist, die so gewählt wird, dass $f_m$ für jedes m kleiner als die Nyquist-Frequenz des Systems ist, d das Kronecker-Symbol ist und

   [Math 19] $\mathbb{O} = \{2k + 1 : k \in \mathbb{N}\}$ die Menge'aller ungeraden ganzen Zahlen ist,

   [Math 20] $\mathbb{E} = \{2k : k \in \mathbb{N}^*\}$ die Menge'aller geraden ganzen Zahlen ungleich Null ist.

   iii. Messen der analogen elektrischen Signale, die von den Elektroden $V_n^{meas}$ am Körper stammen,
   iv. Verarbeiten der aus der Messung in Schritt iii. stammenden Daten, bestehend aus den folgenden Teilschritten:

   a) für jede Elektrode $E_n$, Berechnen der Datenpunkte $M_n$, definiert durch:

   [Math 7]

$$M_n(k) \;=\; \frac{1}{RP} \left| \sum_{p=0}^{P-1} V_n^{meas}(p)e^{ik\beta_p} \right|$$

   wobei R der Wert des Widerstands ist, der für die Messung von $V_n^{meas}$ verwendet wird, wobei $V_n^{meas} = R\,I_n$ an den Klemmen des Widerstands ist, P die Anzahl der Punkte einer diskreten Messsequenz des Stroms $I_n$ ist, p die diskrete Zeit ist, k ein Fourier-Koeffizient zwischen 1 und $(n_e - 1)$ ist und $\beta_p = (2\pi p/P)$ ist,
   b) Erstellen einer Datenmatrix D aus den Datenpunkten $M_n(k)$ für jedes n und jedes k gemäß der folgenden Gleichung:

   [Math 10]

$$D = \begin{pmatrix} \{M_n(1)\} \\ \{M_n(2)\} \\ \{M_n(3)\} \\ \vdots \\ \{M_n(n_e - 1)\} \end{pmatrix}.$$

   c) Erstellen einer vorzeichenbehafteten Datenmatrix, deren Elemente durch die folgende Gleichung definiert sind, wenn die Phasenverschiebung $\Phi_{n,1}(k)$ zwischen dem Ansteuerungspotential an der Elektrode I und

dem an der Elektrode n gemessenen Strom kleiner als $\pi/2$ ist:

[Math 16]

$$\widetilde{D}_n^m = \frac{\sin\left(\Phi_{n,l}(k)\right)}{\left|\sin\left(\Phi_{n,l}(k)\right)\right|} D_n^m.$$

und deren Elemente durch die folgende Gleichung definiert sind, wenn die Phasenverschiebung $\Phi_{n,1}(k)$ zwischen dem Ansteuerungspotential an der Elektrode l und dem an der Elektrode n gemessenen Strom größer oder gleich $\pi/2$ ist:

[Math 18]

$$\widetilde{D}_n^m = \Sigma_n^m D_n^m.$$

wobei $\Sigma$ eine Vorzeichenmatrix ist, die so definiert ist, dass des i-te Element der j-ten Zeile von $\Sigma$ das Vorzeichen von $\cos([2\pi/(j+1)/2)]*(i-1)/n_e)$ ist, wenn j ungrade ist, und das Vorzeichen von $\sin([2\pi/(j/2)]*(i-1)/n_e)$ ist, wenn j gerade ist.

2. Verfahren nach Anspruch 1, wobei sämtliche Potentiale $V_n^{exc}$ die folgende Bedingung erfüllen:

[Math 5]

$$\sum_{n=1}^{n_e} V_n^{exc}(t) = 0.$$

3. Verfahren nach dem vorhergehenden Anspruch, wobei ein Bild anhand eines einstufigen iterativen Rekonstruktionsalgorithmus der kleinsten Quadrate erzeugt wird, der auf die vorzeichenbehafteten Datenmatrix angewendet wird.

4. Verfahren nach einem der vorhergehenden Ansprüche, wobei die Elektroden in gleichmäßigen Winkelabständen um den Umfang des Körpers verteilt sind.

5. Anwendung des Verfahrens nach einem der vorhergehenden Ansprüche zur tomographischen Messung einer Zweiphasenströmung, wobei der Körper eine Rohrleitung einer kerntechnischen Anlage ist.

6. Vorrichtung zur Durchführung eines Verfahrens zur tomographischen Messung mittels elektrischer Impedanz eines Körpers mit einem zylindrischen Teil, der ein Fluid enthält, wobei die Vorrichtung Folgendes aufweist:

- ein Erfassungssystem (4), das mindestens ein programmierbares logisches Netzwerk, ein Modul zur Erzeugung analoger Signale und ein Modul zur Messung analoger Signale aufweist;
- einen Computer, der dazu ausgelegt ist, das Erfassungssystem zu steuern;
- eine Vielzahl von Elektroden (2), die mit dem Erfassungssystem verbunden sind;

wobei die Vorrichtung zur Durchführung des Verfahrens nach einem der Ansprüche 1 bis 4 ausgelegt ist.

**Claims**

1. Electrical-impedance-tomography method for measuring a body (6) comprising a cylindrical portion containing a fluid, comprising the following steps:

i. arranging a number $n_e$ of electrodes (2) around a periphery of the cylindrical portion of the body,
ii. simultaneously exciting each of the $n_e$ electrodes, each electrode being excited by a potential $V_n^{exc}$ having the form:

[Math 1]

$$V_n^{exc}(t) \;=\; A \sum_{m=1}^{n_e} \cos\left(2\pi f_m t\right)\left[\delta_m^{\mathbb{O}}\cos(m\theta_n) + \delta_m^{\mathbb{E}}\sin\left(\frac{m\theta_n}{2}\right)\right]$$

where A is a signal amplitude, $\theta_n$ is the angular position of electrode n, $f_m = m * f0$ is an oscillation frequency, $f_0$ is a fundamental frequency chosen such that $f_m$ is less than the Nyquist frequency of the system for all m, $\delta$ is the Kronecker delta, and

[Math 19]

$$\mathbb{O} = \{2k + 1 : k \in \mathbb{N}\} \text{ is the set of odd integers}$$

[Math 20]

$$\mathbb{E} = \{2k : k \in \mathbb{N}^*\} \text{ is the set of non} - \text{zero even integers.}$$

iii. measuring analogue electrical signals $V_n^{meas}$ delivered by electrodes of the body,
iv. processing the data generated in measuring step iii, this comprising the following sub-steps:

    a) for each electrode $E_n$, computing data points $M_n$ defined by:

[Math 7]

$$M_n(k) \;=\; \frac{1}{RP}\left|\sum_{p=0}^{P-1} V_n^{meas}(p)e^{ik\beta_p}\right|$$

where R is the resistance of the resistor used to measure $V_n^{meas}$ with $V_n^{meas} = R\, I_n$ across the terminals of the resistor, P is the number of points in a discrete sequence of measurement of the current $I_n$, p is the discrete time, k is a Fourier coefficient comprised between 1 and $(n_e - 1)$ and $\beta_p = (2\pi p/P)$,
    b) constructing a data matrix D from the data points $M_n(k)$ for all n and for all k, according to the equation:

[Math 10]

$$D = \begin{pmatrix} \{M_n(1)\} \\ \{M_n(2)\} \\ \{M_n(3)\} \\ \vdots \\ \{M_n(n_e - 1)\} \end{pmatrix}.$$

    c) constructing a signed data matrix the elements of which are defined by the following equation when the phase shift $\Phi_{n,l}(k)$ between the excitation potential at electrode l and the current measured at electrode n is less than n/2:

[Math 16]

$$\widetilde{D}_n^m \;=\; \frac{\sin\left(\Phi_{n,l}(k)\right)}{\left|\sin\left(\Phi_{n,l}(k)\right)\right|} D_n^m.$$

and the elements of which are defined by the following equation when the phase shift $\Phi_{n,l}(k)$ between the excitation potential at electrode l and the current measured at electrode n is greater than or equal to $\pi/2$:

[Math 18]

$$\widetilde{D}_n^m = \Sigma_n^m D_n^m.$$

where $\Sigma$ is a sign matrix defined such that the i-th element of the j-th row of $\Sigma$ is the sign of cosine ($[2\pi/([j+1]/2)]*$ $(i-1)/n_e$) for odd j and the sign of sine($[2\pi/(j/2)]*(i-1)/n_e$) for even j.

2. Method according to Claim 1, the set of potentials $V_n^{exc}$ meeting the condition:

[Math 5]

$$\sum_{n=1}^{n_e} V_n^{exc}(t) = 0.$$

3. Method according to the preceding claim, an image being produced using a one-step iterative least-squares reconstruction algorithm applied to the signed data matrix.

4. Method according to one of the preceding claims, the electrodes being angularly distributed in a regular manner around the periphery of the body.

5. Use of the method according to one of the preceding claims to perform tomographic measurement of a two-phase flow, the body being a pipe of a nuclear installation.

6. Device for implementing an electrical-impedance-tomography method for measuring a body, comprising a cylindrical portion containing a fluid, the device comprising:

    - an acquiring system (4) comprising at least one programmable logic array, a module for generating analogue signals and a module for measuring analogue signals;
    - a computer configured to control the acquiring system;
    - a plurality of electrodes (2) connected to the acquiring system;

the device being configured to implement the method according to any of Claims 1 to 4.

[Fig 1]

Fig. 1

[Fig 2]

Fig. 2

[Fig 3]

$V_n^{meas}$

$V_n^{exc}$ ——————[ R ]—————— $E_n$

# Fig. 3

[Fig 4]

| Etape 1<br>Initialisation<br>a) Chargement et<br>lancement du FPGA<br>b) Réinitialisation des<br>modules sortie | Etape 2<br>Envoi/réception de la<br>requête d'interruption<br>a) Envoi de la requête<br>d'interruption du<br>FPGA vers le Hôte<br>b) Envoi de l'accusé<br>de réception de l'Hôte<br>c) Réception de<br>l'accusé par le FPGA | Etape 3<br>Vérification de<br>l'échantillonnage<br>a) Ecriture des statuts<br>de sortie de chaque<br>point de données<br>b) Envoi d'une<br>impulsion pour chaque<br>échantillon |
|---|---|---|
| Etape 4<br>Génération des<br>fonctions de signaux<br>d'excitation digitaux | Etape 5<br>Génération des<br>signaux d'excitation<br>analogiques<br>a) Conversion des<br>signaux digitaux en<br>signaux analogiques<br>b) Ecriture sur les<br>canaux de sortie | Etape 6<br>Confirmation de la<br>génération des<br>signaux et<br>vérification<br>d'erreurs |

# Fig. 4

[Fig 5]

EP 4 314 789 B1

Etape A
Initialisation
a) Chargement et
lancement du
FPGA
b) Réinitialisation
des
modules entrée

Etape B
Configuration des
mémoires
a) Configuration et
démarrage de la
mémoire à accès
direct
b) Configuration
et démarrage
des 16 files PEPS

Etape C
Envoi/réception de la
requête d'interruption
a) Envoi de la requête
d'interruption du
FPGA vers le Hôte
b)Envoi de l'accusé
de réception de l'Hôte
c) Réception de
l'accusé par le FPGA

Etape D
Vérification de
l'échantillonnage
a) Ecriture des
statuts d'entrée
de chaque point
de données
b) Envoi d'une
impulsion pour
chaque échantillon

Etape E
Acquisition des
signaux de mesure
analogiques
a) Conversion des
signaux analogiques
en signaux digitaux
b) Ecriture sur les
16 files PEPS

Etape F
Transformée de
Fourier de
chaque canal
a) Lecture des
16 files PEPS
b) Calcul des
amplitudes
de Fourier

Etape G
Adressage des données
a) Filtre et adressage
des coefficients de
Fourier
b) Adressage du
numéro de l'électrode
correspondante au
point de données
c) Ecriture des données
adressées sur la
mémoire à accès direct

Etape H
Construction de la
matrice de données
a)Lecture de (ne*(ne-1))
points de données de la
mémoire à accès direct
b) Construire une
matrice de données à
partir des adresses
c) Tri des données selon
l'harmonique
d'excitation

Etape I
Enregistrement des
matrices des
données

Etape J
Confirmation de
l'acquisition des
signaux et vérification
d'erreurs

Fig. 5

[Fig 6]

Fig. 6

[Fig 7]

Fig. 7

[Fig 8]

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **TEAGUE, G.** Mass flow measurement of multi-phase mixtures by means of tomographic techniques. University of Cape Town, 2002
- **DUPRÉ, A** ; **MYLVAGANAM, S.** Simultaneous and Continuous Excitation Strategy for High Speed EIT : the ONE-SHOT method.. *Proceedings of the 9th World Congress on Industrial Process Tomography*, 2017, 667-674
- **DARNAJOU, M.** ; **DUPRÉ, A.** ; **DANG, C.** ; **RICCIARDI, G.** ; **BOURENNANE, S.** ; **BELLIS, C.** On the implementation of simultaneous multi-frequency excitations and measurements for electrical impedance tomography.. *Sensors*, 2019, vol. 19 (17)
- **DARNAJOU, M.** ; **DUPRÉ, A.** ; **DANG, C.** ; **RICCIARDI, G** ; **BOURENNANE, S.** ; **BELLIS, C.** ; **MYLVAGANAM, S.** High Speed EIT with Multifrequency Excitation using FPGA and Response Analysis using FDM.. *IEEE Sensors*, 2020
- High Speed EIT With Multifrequency Excitation Using FPGA and Response Analysis Using FDM. **DARNAJOU M. et al.** IEEE SENSORS JOURNAL. IEEE, 30 March 2020, vol. 20, 8698-8710
- **DUPRE A. et al.** A Simultaneous and Continuous Excitation Method for High-Speed Electrical Impedance Tomography with Reduced Transients and Noise Sensitivity. *Sensors*, 28 March 2018, 1-18